# DEMANDE DE BREVET EUROPEEN

(11) **EP 0 825 089 A1**
(43) Date de publication de la demande: **25.02.1998**
(21) Numéro de dépôt: 97401853.3
(22) Date de dépôt: 01.08.1997
(51) Int. Cl.: B62D 1/10

(54) **Dispositif de commande de direction de véhicule automobile comportant un bloc de commande agencé au centre du volant**

(30) Priorité: 20.08.1996 FR 9610294
(71) Demandeur: RENAULT, 92109 Boulogne-Billancourt (FR)
(72) Inventeur: Gallinato-Contino, Roland, 83780 Flayosc (FR)

(57) **Abrégé**

L'invention propose un dispositif (10) de commande de direction comportant une colonne de direction tubulaire (12), un arbre de direction (14), un volant de direction (26) lié en rotation à l'extrémité supérieure libre de l'arbre de direction, et un bloc (31) de commandes monté au centre du volant (26) et fixe en rotation par rapport à la colonne de direction (12), par l'intermédiaire d'un support tubulaire (46) coaxial à l'arbre de direction (14), caractérisé en ce que le support tubulaire (46) est monté à l'extrémité supérieure de la colonne de direction tubulaire (14), en ce que le moyeu de volant (32) est monté tournant autour du support (46), et en ce que le moyeu de volant (32) est lié en rotation à l'arbre de direction (14) par un mécanisme à engrenages comportant un pignon de moyeu de volant (78) et un pignon d'arbre de direction (76) coaxiaux qui engrènent avec un manchon (70) denté intérieurement (72, 74) et excentré par rapport à l'axe (X-X)des pignons (76, 78).

## Description

La présente invention concerne un dispositif de commande de direction de véhicule automobile.

L'invention concerne un dispositif du type comportant une colonne de direction tubulaire, un arbre de direction monté tournant à l'intérieur de la colonne de direction, et un volant de direction lié en rotation à l'extrémité supérieure libre de l'arbre de direction.

Le volant comporte généralement une jante annulaire qui est reliée, par des branches d'orientation sensiblement radiale, à un moyeu de volant qui est lui-même lié en rotation à l'extrémité supérieure libre de l'arbre de direction.

Selon une conception connue, un tel dispositif de direction peut comporter un bloc de commandes monté au centre du volant et qui comporte par exemple une commande d'avertisseur sonore ainsi que d'autres interrupteurs et commutateurs de commande de différents accessoires et équipements du véhicule.

Selon un agencement connu, le bloc de commandes monté au centre du vqlant est fixe en rotation par rapport à la colonne de direction, c'est-à-dire qu'il ne tourne pas avec le volant, son montage étant assuré à cet effet par l'intermédiaire d'un support tubulaire coaxial à l'arbre de direction, et un câble de raccordement électrique s'étend, depuis le bloc de commandes, axialement puis radialement à travers le support tubulaire en direction d'un boîtier fixe.

Un exemple d'un tel agencement d'un bloc central de commandes fixe en rotation est décrit et représenté dans le document FR-A-2.720.709.

Cet agencement immobile en rotation du bloc de commandes, tout en permettant un entraînement en rotation de l'arbre de direction par le volant, est obtenu par un mécanisme à engrenages qui est intégré à l'intérieur de la colonne de direction, à la partie inférieure de cette dernière, de sorte que les différents composants du mécanisme encombrent considérablement cette zone de la colonne de direction et en rendent la réalisation, l'assemblage et le montage particulièrement complexes et onéreux.

Par ailleurs, la solution proposée dans ce document peut aboutir à un défaut de positionnement angulaire du bloc de commandes, résultant des jeux de fonctionnement des différents composants du mécanisme.

Enfin, la conception proposée dans ce document est particulièrement complexe à mettre en oeuvre dans le cas où l'ensemble de la colonne de direction est réglable tant en hauteur qu'en inclinaison pour adapter le poste de conduite à la morphologie du conducteur.

L'invention a pour objet de proposer un dispositif de direction du type mentionné précédemment qui permet de remédier aux inconvénients qui viennent d'être évoqués.

Dans ce but, le dispositif de commande de direction de véhicule automobile selon l'invention est caractérisé en ce que le support tubulaire du bloc de commandes est monté à l'extrémité supérieure de la colonne de direction tubulaire, en ce que le moyeu de volant est monté tournant autour du support, et en ce que le moyeu de volant est lié en rotation à l'arbre de direction par un mécanisme à engrenages comportant un pignon de moyeu de volant et un pignon d'arbre de direction coaxiaux qui engrènent avec un manchon denté intérieurement excentré par rapport à l'axe des pignons.

Selon d'autres caractéristiques de l'invention :
- le manchon est monté libre en rotation par rapport au support tubulaire et est porté par ce dernier, et le câble de raccordement s'étend axialement entre le pignon d'arbre de direction et le manchon, puis radialement à travers une paroi du support tubulaire ;
- le support tubulaire est réalisé en deux parties adjacentes axialement et fixées l'une à l'autre parmi lesquelles une partie inférieure du support, fixée à l'extrémité supérieure de la colonne de direction tubulaire, comporte une jupe cylindrique externe à l'intérieur de laquelle le manchon est monté à rotation, et une jupe cylindrique interne coaxiale à laquelle est fixée la partie supérieure du support qui porte le bloc de commandes ;
- la partie inférieure du support comporte une virole inférieure, pour sa fixation à l'extrémité supérieure de la colonne de direction, qui se prolonge par une paroi radiale à partir de laquelle les jupes externe et interne s'étendent axialement et qui est traversée par le câble de raccordement ;
- la jupe externe de la partie inférieure du support comporte deux découpes diamétralement opposées pour le passage du pignon d'arbre de direction et pour le passage du câble de raccordement ;
- des moyens élastiques sont interposés entre le support et le manchon pour solliciter radialement ce dernier en engrènement avec les pignons de l'arbre de direction et du moyeu de volant ;
- les moyens élastiques sont interposés radialement entre le support tubulaire et une portion annulaire lisse en vis-à-vis du manchon située axialement entre les deux extrémités axiales, inférieure et supérieure, dentées intérieurement du manchon qui coopèrent avec les pignons d'arbre de direction et de moyeu de volant, respectivement ;
- la partie supérieure du support comporte une virole supérieure autour de laquelle le moyeu de volant est monté à rotation et à l'extrémité axiale supérieure de laquelle est fixé le bloc de commandes ;
- le moyeu de volant est immobilisé axialement entre une surface annulaire inférieure de butée formée sur la partie supérieure du support et une surface annulaire supérieure de butée formée en vis-à-vis sur le bloc de commandes ;
- le dispositif comporte un tube de guidage du câble de raccordement dont une extrémité est fixée à l'extrémité axiale inférieure de la virole de la partie supérieure du support, et dont l'autre extrémité traverse ladite paroi radiale de la partie inférieure du support ;
- le support tubulaire comporte des ailes latérales qui s'étendent radialement sous le volant et qui portent des blocs de commande ;
- le manchon comporte deux ergots diamétralement opposés qui agissent sur des composants de blocs fixes de commandes pour rappeler en position neutre une commande d'indicateur de changement de direction.

D'autres caractéristiques et avantages de l'invention apparaîtront à la lecture de la description détaillée qui suit pour la compréhension de laquelle on se reportera aux dessins annexés dans lesquels :

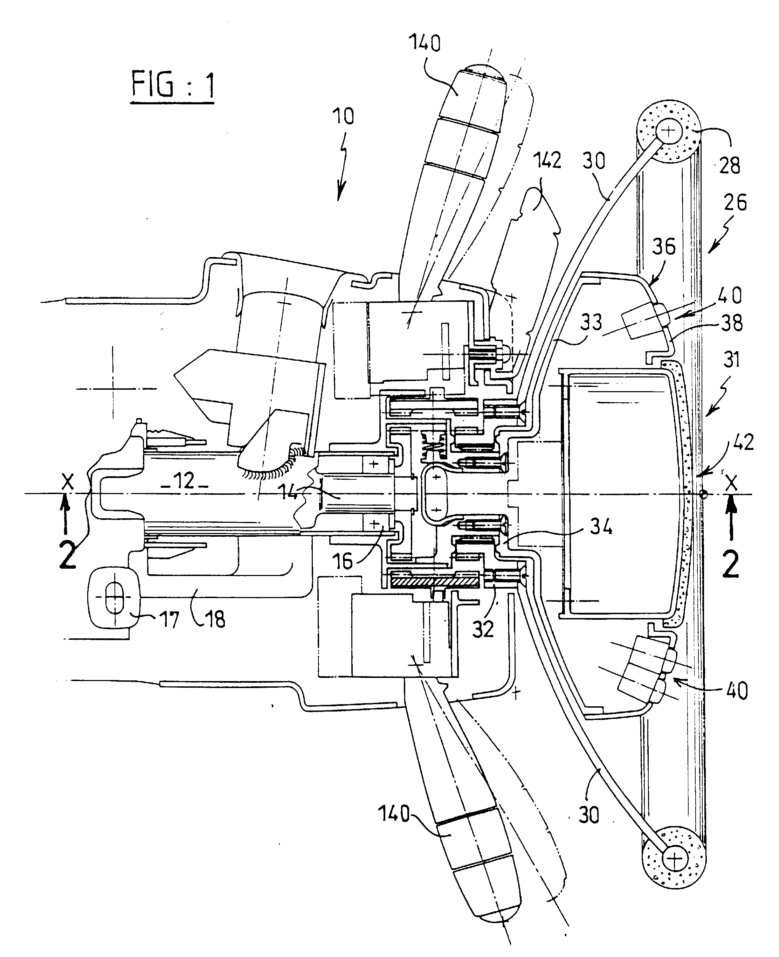

- la figure 1 est une vue schématique qui illustre la partie supérieure d'une colonne de direction de véhicule automobile appartenant à un dispositif de commande de direction réalisé conformément aux enseignements de l'invention et qui est représentée partiellement en section axiale selon la ligne 1-1 de la figure 2 ;
- la figure 2 est une vue similaire à celle de la figure 1 qui illustre le dispositif de commande en section selon la ligne 2-2 de la figure 1;
- les figures 3 et 4 sont des vues similaires à celles des figures 1 et 2 qui illustrent à plus grande échelle les principaux composants du dispositif de commande conforme aux enseignements de l'invention ;
- la figure 5 est une demi-vue en section selon la ligne 5-5 de la figure 4 ; et
- la figure 6 est une demi-vue en section selon la ligne 6-6 de la figure 4, les figures 5 et 6 étant représentées juxtaposées sur la même planche de dessins.

On a représenté sur les figures un dispositif 10 de commande d'une direction de véhicule automobile qui comporte, de manière connue, une colonne tubulaire de direction 12 à l'intérieur de laquelle est monté tournant un arbre de direction 14 qui lui est coaxial d'axe X-X.

Seuls les tronçons d'extrémité supérieure libre de la colonne tubulaire 12 et de l'arbre de direction massif 14 sont illustrés sur les figures, un roulement supérieur 16 étant interposé entre ces deux composants pour le guidage en rotation de l'arbre de direction 14 à l'intérieur de la colonne de direction 12 et pour le positionnement axial relatif de ces deux éléments 12 et 14.

On a représenté de manière schématique des moyens 17 pour la fixation de la colonne de direction 12 à l'intérieur du véhicule ainsi qu'une commande 18 permettant d'assurer un réglage en hauteur ou en profondeur, c'est-à-dire selon l'axe X-X, et un blocage de l'ensemble de la colonne de direction dans la position désirée par le conducteur de manière à adapter le poste de conduite à sa morphologie.

Selon un agencement connu, la colonne de direction est équipée d'un antivol 20.

Des coquilles d'habillage et de protection 22 et 24 complètent l'agencement connu des principaux composants de la colonne de direction qui viennent d'être décrits.

Par convention, les tronçons d'extrémité libre de la colonne 12 et de l'arbre 14 sont appelés tronçons d'extrémité supérieure, leurs extrémités inférieures étant agencées plus bas dans le véhicule sensiblement au niveau du pédalier.

Pour l'entraînement en rotation, autour de l'axe X-X et dans les deux sens, de l'arbre de direction 14, le dispositif 10 comporte un volant 26 qui est constitué pour l'essentiel par une jante 28 de forme générale annulaire qui est reliée par des branches 30 à un moyeu de volant 32.

Les branches 30 s'étendent radialement depuis la jante 28 et en-dessous du volant, c'est-à-dire en direction de l'extrémité libre de l'arbre de direction 12.

Un bloc central de commande 31 est agencé au centre du volant, c'est-à-dire à l'intérieur de la jante 28 et entre les branches 30.

Grâce à un agencement conforme aux enseignements de l'invention, qui sera décrit par la suite plus en détails, le bloc de commandes 31 est immobile en rotation autour de l'axe X-X, c'est-à-dire qu'il ne tourne pas en même temps que le volant et les différentes commandes qu'il comporte, accessibles au conducteur, occupent ainsi toujours la même position angulaire autour de l'axe X-X.

Dans le mode de réalisation illustré sur les figures, le bloc de commandes 31 comporte une platine fixe 33 qui est une pièce en forme générale de cuvette agencée au centre du volant 26 à proximité des branches 30 et dont la partie centrale comporte une collerette radiale de fixation 34.

La platine 33 comporte un couvercle périphérique rapporté 36 qui délimite une portion annulaire 38 orientée face au conducteur sur laquelle sont agencés des boutons de commande 40 sur lesquels le conducteur peut agir sans que ses mains quittent la jante 28 du volant 26.

Au centre du bloc de commandes 31, c'est-à-dire à l'intérieur de la partie annulaire 38, il est prévu un sous-ensemble 42 en forme générale de coussin central qui est monté mobile axialement par rapport à la platine 33.

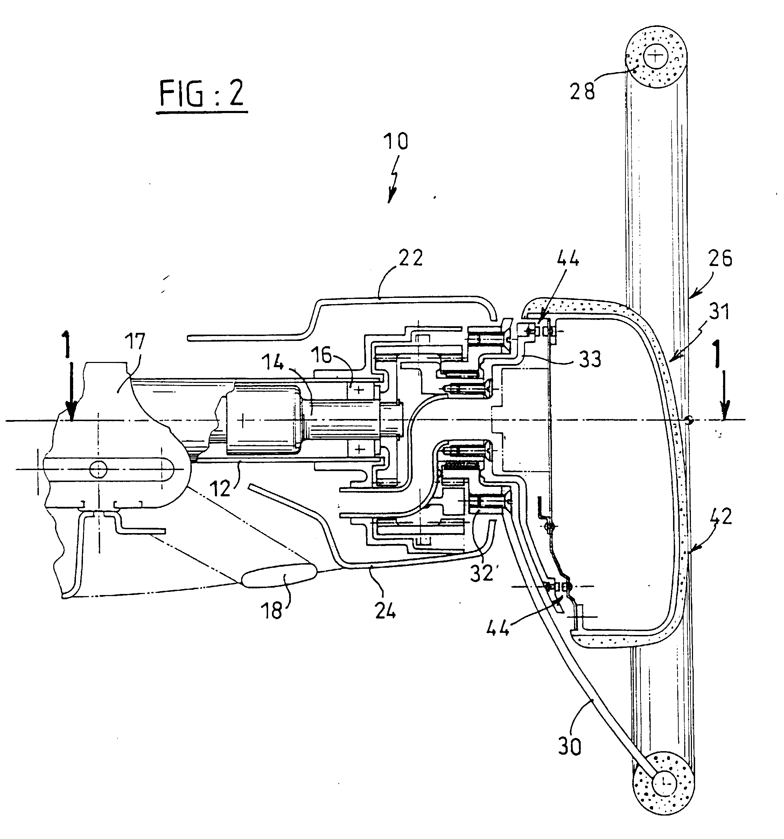

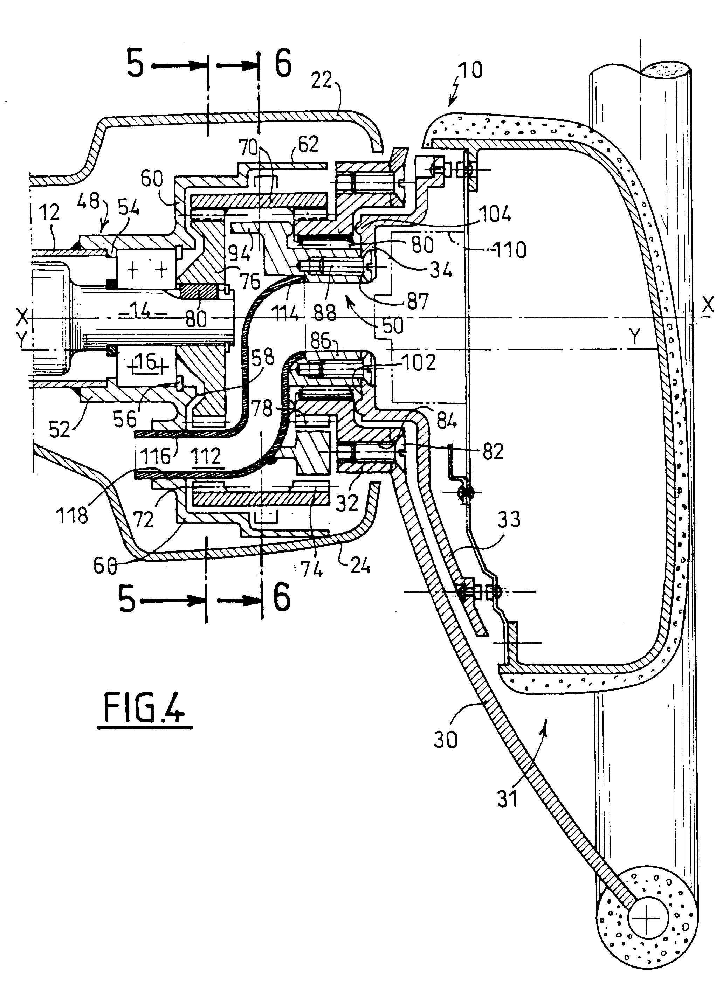

Dans sa position de repos, le coussin 42 est rappelé élastiquement vers la droite en considérant les figures, en éloignement de la platine 33, et le conducteur peut agir sur le coussin 42 à l'encontre de ses moyens de rappel élastiques pour le déplacer en direction de la platine 33, en vue par exemple de provoquer l'actionnement d'un avertisseur sonore par venue en contact électrique mutuel de plots de contact 44 agencés en vis-à-vis sur le coussin 42 et sur la platine 33 comme on peut le voir en détails aux figures 2 et 4.

Le coussin peut constituer un boîtier pour un sac gonflable de protection du conducteur en cas de choc.

On décrira maintenant l'agencement conforme aux enseignements de l'invention qui permet de fixer le bloc de commandes 31 sur la colonne de direction tubulaire 12, qui permet d'assurer le raccordement électrique des différents composants du bloc de commandes 31 au circuit électrique général du véhicule, tout en permettant l'entraînement en rotation de l'arbre de direction 14 par le volant 26.

A cet effet, la collerette 34 de la platine 33 du bloc de commandes 31 est fixée sur un support 46 de forme générale tubulaire et coaxial à l'axe X-X.

Le support 46 est réalisé en deux parties, c'est-à-dire une partie inférieure 48 qui est fixée à l'extrémité supérieure libre de la colonne de direction tubulaire 12 et une partie supérieure 50 adjacente à la partie inférieure 48, à laquelle elle est fixée axialement et en rotation, et sur laquelle est fixée la collerette 34 du bloc de commandes 31.

La partie inférieure 48 du support tubulaire 46 comporte une virole inférieure 52 qui est fixée directement sur l'extrémité libre supérieure de la colonne de direction 12 par rapport à laquelle elle est positionnée par un épaulement radial interne 54.

Le roulement 16 est avantageusement monté à l'intérieur de la virole inférieure 52 dans laquelle il est positionné axialement entre l'épaulement 54 et un anneau élastique 56, le roulement 16 étant ainsi indirectement interposé entre l'arbre de direction 14 et la colonne de direction 12.

Au voisinage de son extrémité axiale avant 58, la virole inférieure 52 se prolonge radialement vers l'extérieur par une paroi radiale 60.

La partie inférieure 48 du support tubulaire 46 comporte une jupe cylindrique annulaire externe 62 et une jupe cylindrique annulaire interne 64 qui sont coaxiales et qui s'étendent axialement en direction de la partie supérieure 50 du support tubulaire 46 à partir de la paroi radiale 60.

Les jupes externe 62 et interne 64 délimitent entre elles un logement annulaire 68 qui est délimité axialement à son extrémité inférieure par la paroi radiale 60 et qui est ouvert axialement à son extrémité supérieure opposée.

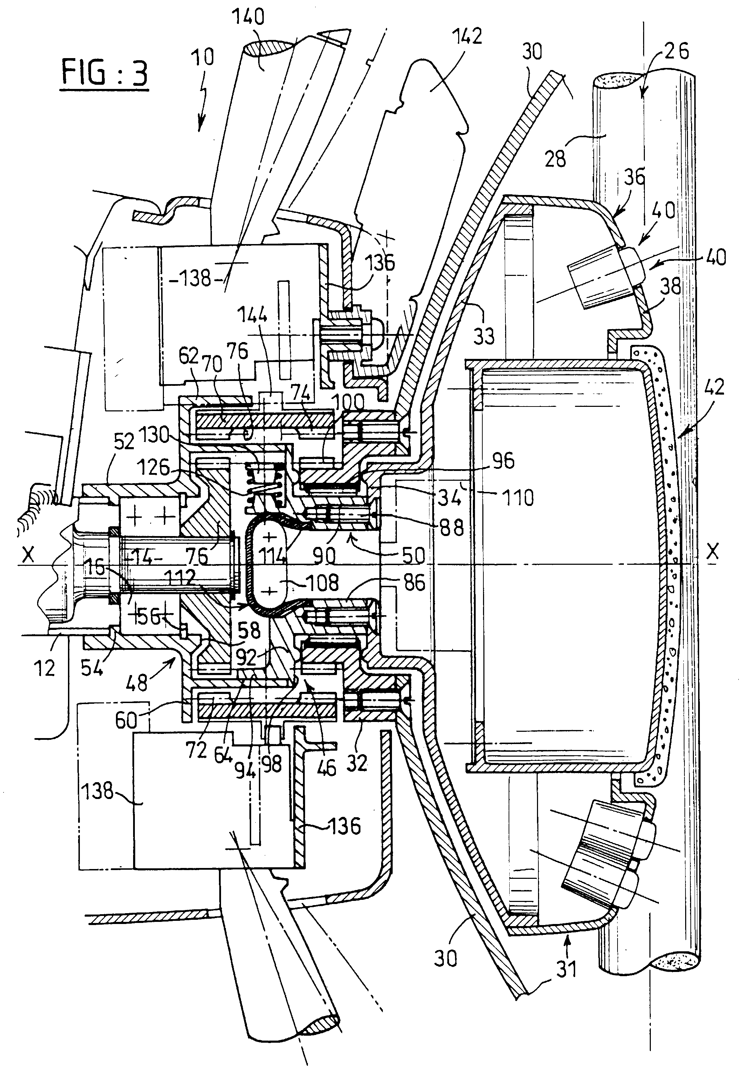

Le logement 68 reçoit, libre en rotation, la partie axiale inférieure d'un manchon denté intérieurement 70 qui comporte, à son extrémité axiale inférieure, c'est-à-dire à gauche en considérant les figures 3 et 4, une série de dents 72 et, à son extrémité axiale supérieure opposée, une série de dents 74, les séries de dents 72 et 74 étant séparées par un tronçon cylindrique concave et lisse 75 de la paroi interne du manchon denté 66.

Le manchon denté 70 assure l'engrènement par ses dents 72 avec les dents correspondantes d'un pignon d'arbre 76 et par ses dents 74 avec les dents correspondantes d'un pignon de moyeu 78.

Le pignon d'arbre 76 est, dans ce mode de réalisation, monté à l'extrémité libre de l'arbre de direction 14 sur lequel il est immobilisé en rotation par une clavette 80.

Le pignon de moyeu 78 est réalisé venu de matière en une seule pièce avec le moyeu 32 du volant 26 à partir duquel il se prolonge axialement en direction de la colonne de direction tubulaire 12.

Le moyeu de volant 32 est fixé axialement et est lié en rotation aux branches 30 du volant 26 par une série de vis de fixation 82 qui sont vissées axialement dans des trous taraudés 84, les pignons d'arbre 76 et de moyeu 78 sont coaxiaux, d'axe X-X, mais leur axe commun est excentré par rapport à l'axe Y-Y du manchon denté intérieure 70.

Ainsi, comme on peut le voir aux figures 4 à 6, les pignons 76 et 78 n'engrènent qu'avec la partie haute des secteurs dentés intérieurement 72 et 74 du manchon 70, la partie inférieure entre les pignons 76, 78 et le manchon denté 70 étant libre.

La partie supérieure 50 du support tubulaire 46 comporte une virole supérieure 86, d'orientation axiale, à l'extrémité annulaire de laquelle est fixée la collerette 34 appartenant à la platine 33 du bloc de commandes 31, au moyen de vis 88 d'orientation axiale qui sont vissées dans des trous taraudés 90 de la virole supérieure 86 de manière à fixer axialement et en rotation le bloc de commandes 31 sur le support tubulaire 46.

La virole 86 se prolonge radialement vers l'extérieur, au voisinage de son extrémité axiale inférieure, par une paroi radiale 92 qui se prolonge elle-même axialement par un manchon 94 de montage et de centrage de la partie supérieure 50 à l'intérieur de la jupe interne 64 de la partie inférieure 48 du support tubulaire 46, la fixation axiale et en rotation des deux parties 50 et 48 du support tubulaire 46 étant par exemple assuré par l'emmanchement à force du manchon 94 à l'intérieur de la jupe interne 64.

Ainsi, le module de commandes 31 est fixé axialement et en rotation à l'extrémité de la colonne de direction 12 par le support tubulaire 46 en deux parties 48 et 50.

Le pignon de moyeu 78, et donc le moyeu 32 du volant 26, est guidé en rotation autour de la virole supérieure 86 de la partie supérieure 50 du support tubulaire 46, ici avec interposition d'un roulement à aiguilles 96.

Le moyeu 32, et donc le volant 26, est ainsi monté libre en rotation autour de l'axe X-X sur le support tubulaire 46 et il est aussi immobilisé axialement par rapport à ce dernier, de manière à occuper une position axiale constante par rapport à la colonne de direction tubulaire 12.

A cet effet, la face transversale supérieure 98 de la paroi radiale 92 de la partie supérieure 50 du support comporte une nervure annulaire de butée 100 et la face inférieure 102 de la collerette 34 du bloc de commandes 31 comporte une nervure annulaire de butée 104, les faces transversales annulaires d'extrémités opposées, inférieure et supérieure, du pignon de moyeu 78 étant reçues entre les deux nervures de butée en vis-à-vis 100 et 104.

Le montage du moyeu de volant 32 avec son pignon de moyeu 78 autour de la virole supérieure 86 est bien entendu assuré préalablement à la fixation de la platine 33 avec la collerette 34 sur l'extrémité axiale supérieure de la virole supérieure 86 de manière à emprisonner axialement le pignon 78 entre les nervures de butée 100 et 104.

Le raccordement électrique du bloc de commandes 31 avec le circuit électrique général du véhicule est assuré au moyen d'au moins un câble de raccordement 108 qui s'étend électriquement depuis un bloc de connexion 110, illustré schématiquement sur les figures, vers l'extérieur du dispositif 10.

Le câble de raccordement électrique 110 est guidé sur son parcours par un tube de guidage 112 qui est rigide ou semi-rigide.

Une première extrémité 114 du tube 112 est fixée à l'intérieur de la douille supérieure 86 de la partie supérieure 50 du support tubulaire 46 de manière à prolonger l'alésage interne 87 de la douille supérieure 86 pour assurer un début de parcours axial du câble de raccordement 108 en partant du bloc de connexion 110.

Le tube de guidage 112 est ensuite coudé à angle droit pour prendre une orientation radiale, vers le bas en considérant la figure 4, puis est coudé à nouveau à angle droit de manière à comporter un tronçon d'extrémité libre 116 qui est d'orientation axiale et qui passe entre les dents en vis-à-vis du pignon d'arbre 76 et de la portion dentée 72 du manchon denté intérieurement 70, dans la zone basse dans laquelle ces deux composants ne sont pas en engrènement mutuel, puis pour traverser un orifice 118 formé dans la paroi radiale 60 de la partie inférieure 48 du support tubulaire 46 et sortir axialement de ce dernier en direction d'un boîtier de connexion fixe (non représenté sur les figures).

Ainsi, le bloc de commandes 31 est raccordé électriquement au véhicule selon un trajet situé entièrement à l'intérieur du mécanisme de liaison en rotation à engrenage 70, 72, 76, 78, le tube de guidage 112 étant entièrement fixe de même bien entendu que le câble 108 qui le traverse.

On décrira maintenant les moyens, qui sollicitent en permanence le manchon denté intérieurement 70 en engrènement avec les pignons d'arbre 76 et de moyeu 78 en se reportant notamment aux figures 3, 5 et 6, pour le rattrapage des jeux résultant des dispersions d'usinage ou d'usure de fonctionnement.

A cet effet, il est prévu un basculeur 120 qui est monté pivotant autour d'un axe fixe 122 et qui porte un galet 124 qui agit en permanence contre la portion lisse 75 en vis-à-vis de la face cylindrique interne de la partie centrale du manchon denté 70, sous l'action d'un ressort hélicoïdal de compression 126 qui est interposé entre l'extrémité libre 128 du basculeur et une partie fixe en vis-à-vis 130 du support tubulaire 46.

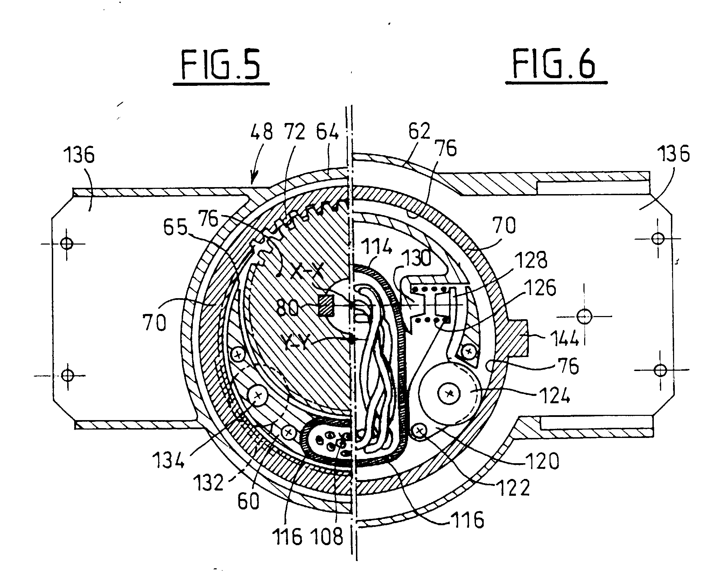

Ainsi, le galet 124 sollicite en permanence le manchon denté 70 en ayant tendance à le faire descendre radialement en considérant les figures 5 et 6, le guidage radial du manchon denté 70 par rapport aux pignons 76 et 78 étant complété par un autre galet 132 qui est lui monté fixe radialement autour d'un axe de rotation 134.

Les deux galets 124 et 132 qui coopèrent avec la surface 75 sont reçus entre les secteurs dentés 72 et 74 et ils positionnent axialement le manchon 70 par rapport au support 46.

Comme on peut le voir plus aux figures 3, 5 et 6, la partie inférieure fixe 48 du support tubulaire 46 comporte des ailes latérales diamétralement opposées 136 qui s'étendent radialement vers l'extérieur et qui servent de support pour la fixation de blocs 138 de commandes 140 agencées de manière fixe par rapport à la colonne de direction 12 et qui sont situées sous le volant 26, les différents modules de commande pouvant être complétés par une commande 142 pour la radio du véhicule.

Afin d'assurer, de manière connue, un rappel automatique en position neutre des feux de clignotement, le manchon denté 70 peut comporter deux ergots diamétralement opposés 144 qui agissent sur des composants en vis-à-vis (non représentés sur les figures) des blocs 138.

Pour permettre l'engrènement du pignon 76 avec les dents en vis-à-vis 72 du manchon 70, la jupe cylindrique interne 64 comporte bien entendu une échancrure ou encoche 65 dans la zone considérée (voir figure 5).

## Revendications

1. Dispositif (10) de commande de direction de véhicule automobile comportant une colonne de direction tubulaire (12), un arbre de direction (14) monté tournant à l'intérieur de la colonne de direction, un volant de direction (26) lié en rotation à l'extrémité supérieure libre de l'arbre de direction, un bloc (31) de commandes monté au centre du volant (26) et fixe en rotation par rapport à la colonne de direction (12), par l'intermédiaire d'un support tubulaire (46) coaxial à l'arbre de direction (14), et un câble (108) de raccordement électrique qui s'étend, depuis le bloc de commandes (31), axialement puis radialement à travers le support tubulaire (46) en direction d'un boîtier fixe, caractérisé en ce que le support tubulaire (46) est monté à l'extrémité supérieure de la colonne de direction tubulaire (14), en ce que le moyeu de volant (32) est monté tournant autour du support (46), et en ce que le moyeu de volant (32) est lié en rotation à l'arbre de direction (14) par un mécanisme à engrenages comportant un pignon de moyeu de volant (78) et un pignon d'arbre de direction (76) coaxiaux qui engrènent avec un manchon (70) denté intérieurement (72, 74) et excentré par rapport à l'axe (X-X) des pignons (76, 78).

2. Dispositif selon la revendication 1, caractérisé en ce que le manchon (70) est monté libre en rotation par rapport au support tubulaire (46) et est porté par ce dernier, et en ce que le câble de raccordement (108) s'étend axialement entre le pignon d'arbre de direction (76) et le manchon (70, 72), puis radialement à travers une paroi (60) du support tubulaire (46).

3. Dispositif selon l'une des revendications 1 ou 2, caractérisé en ce que le support tubulaire (46) est réalisé en deux parties (48, 50) adjacentes axialement et fixées l'une à l'autre parmi lesquelles une partie inférieure (48) du support, fixée à l'extrémité supérieure de la colonne de direction tubulaire (14), comporte une jupe cylindrique externe (62) à l'intérieur de laquelle le manchon (70) est monté à rotation, et une jupe cylindrique interne (64) coaxiale à laquelle est fixée la partie supérieure du support (50) qui porte le bloc de commandes (31, 33, 34).

4. Dispositif selon la revendication 3 prise en combinaison avec la revendication 2, caractérisé en ce que la partie inférieure (48) du support comporte une virole inférieure (52), pour sa fixation à l'extrémité supérieure de la colonne de direction (14), qui se prolonge par une paroi radiale (60) à partir de laquelle les jupes externe (60) et interne (62) s'étendent axialement et qui est traversée par le câble de raccordement (108).

5. Dispositif selon l'une des revendications 3 ou 4, caractérisé en ce que la jupe externe (62) de la partie inférieure (48) du support (46) comporte deux découpes diamétralement opposées (65) pour le passage du pignon d'arbre de direction (76) et pour le passage du câble de raccordement (108).

6. Dispositif selon l'une quelconque des revendications 3 à 5, caractérisé en ce que des moyens élastiques (126) sont interposés entre le support (46) et le manchon (70) pour solliciter radialement ce dernier en engrènement avec les pignons (76, 78) de l'arbre de direction (14) et du moyeu de volant (32).

7. Dispositif selon la revendication 6, caractérisé en ce que lesdits moyens élastiques sont interposés radialement entre le support tubulaire (46) et une portion annulaire lisse en vis-à-vis (76) du manchon située axialement entre les deux extrémités axiales, inférieure (72) et supérieure (74), dentées intérieurement du manchon (70) qui coopèrent avec les pignons (76) d'arbre de direction et (74) de moyeu de volant, respectivement.

8. Dispositif selon l'une quelconque des revendications 3 à 7, caractérisé en ce que la partie supérieure (50) du support (46) comporte une virole supérieure (86) autour de laquelle le moyeu de volant (32, 78) est monté à rotation et à l'extrémité axiale supérieure de laquelle est fixé le bloc de commandes (31, 33, 34).

9. Dispositif selon la revendication 8, caractérisé en ce que le moyeu de volant (32, 78) est immobilisé axialement entre une surface annulaire inférieure de butée (100) formée sur la partie supérieure (50) du support (46) et une surface annulaire supérieure de butée (104) formée en vis-à-vis sur le bloc de commandes (31, 33, 34).

10. Dispositif selon l'une des revendications 8 ou 9 prises en combinaison avec la revendication 4, caractérisé en ce qu'il comporte un tube (112) de guidage du câble de raccordement dont une extrémité (114) est fixée à l'extrémité axiale inférieure de la virole (86) de la partie supérieure (50) du support (46), et dont l'autre extrémité (116) traverse (118) ladite paroi radiale (60) de la partie inférieure (48) du support (46).

11. Dispositif de direction selon l'une quelconque des revendications précédentes, caractérisé en ce que le support tubulaire (46) comporte des ailes latérales (136) qui s'étendent radialement sous le volant (26) et qui portent des blocs de commande (138).

12. Dispositif de direction selon l'une quelconque des revendications précédentes, caractérisé en ce que le manchon (70) comporte deux ergots diamétralement opposés (144) qui agissent sur des composants de blocs fixes de commandes (138) pour rappeler en position neutre une commande d'indicateur de changement de direction.
